# NEUE EUROPÄISCHE PATENTSCHRIFT

(11) **EP 3 179 138 B2**
(45) Veröffentlichungstag und Bekanntmachung des Hinweises auf die Entscheidung über den Einspruch: **12.08.2026**
(45) Hinweis auf die Patenterteilung: 10.05.2023
(21) Anmeldenummer: 16202971.4
(22) Anmeldetag: 08.12.2016
(51) Int. Cl.: F16H 57/08, F16H 1/28, F16D 1/027

(54) **VORRICHTUNG UND VERFAHREN ZUR VERBINDUNG ZWEIER ROTIERENDER MASCHINENTEILE**
DEVICE AND METHOD FOR CONNECTING TWO ROTATING MACHINE PARTS
DISPOSITIF ET PROCÉDÉ DE LIAISON DE DEUX PARTIES ROTATIVES DE MACHINE

(30) Priorität: 11.12.2015 DE 102015121652
(43) Veröffentlichungstag der Anmeldung: 14.06.2017
(73) Patentinhaber: WITTENSTEIN SE, 97999 Igersheim (DE)
(72) Erfinder: Völker, Klaus, 97999 Igersheim (DE); Winkler, Julian, 97450 Arnstein (DE); Popp, Julian, 97953 Königheim (DE)
(74) Vertreter: Zimmermann & Partner Patentanwälte mbB

(56) Entgegenhaltungen:
- EP-A1- 1 479 948
- DE-A1- 10 125 322
- DE-A1- 10 125 322
- DE-A1- 10 207 396
- DE-A1- 10 207 398
- DE-A1- 102004 054 045
- DE-A1- 102009 007 105
- DE-A1- 102009 007 105
- GB-A- 2 149 053
- GB-A- 2 149 053
- US-A1- 2006 142 113
- US-A1- 2006 142 113
- US-A1- 2010 087 285
- US-A1- 2010 087 285
- "Schraubensicherung", WIKIPEDIA, 27 August 2014 (2014-08-27), XP093183805, Retrieved from the Internet <URL:https://de.wikipedia.org/w/index.php?title=Schraubensicherung&oldid=133466530>

## Beschreibung

### Gebiet der Erfindung

Die Erfindung betrifft ein Planetengetriebe mit einer Vorrichtung und ein Verfahren zur Verbindung zweier rotierender Maschinenteile.

### Stand der Technik

Aus dem Stand der Technik sind Verbindungen von um eine Asche rotierenden Maschinenteilen bekannt. Typische Verbindungsvorrichtungen verwenden beispielsweise mehrere Bolzen, welche auf einem Lochkreisdurchmesser angeordnet sind, um zwei Maschinenteile zu verbinden.

Die US 2006/0142113 A1 betrifft ein Planetengetriebe mit einem Planetenträger, welcher mit einer Abtriebswelle verbunden ist. Die Abtriebswelle weist einen Abtriebsflansch auf, an welchem wiederum weitere Maschinenteile angeschlossen werden. Bei diesem Stand der Technik werden die Maschinenteile Planetenträger und Abtriebswelle mittels mehrerer Schrauben verbunden, welche jeweils alternierend zu den Planetenbolzen in Umfangsrichtung angeordnet sind.

Beide Maschinenteile sind zusammen mittels Lagern gelagert. Der Lagerinnendurchmesser ist bauartbedingt größer als der Durchmesser des Außenumfangs der Aufnahmen für die Schrauben oder größer als der äußerste Durchmesser der Planetenbolzen.

Die Verbindungsvorrichtungen aus dem Stand der Technik sind insbesondere für Planetengetriebe insofern unbefriedigend, als dass sie nur eine geringe Variantenvielfalt zulassen und die konstruktiven Möglichkeiten einschränken.

Aus der DE 10 2009 007 105 A1 ist ein Planetengetriebe mit zwei gegeneinander eingestellten oder verspannten Wälzlagern bekannt, wobei die Wälzlager ein Abriebsteil lagern, das quer zu seiner Längsmittelachse in zwei Teile unterteilt ist, wobei jeder der beiden Teile eines der beiden Wälzlager aufweist.

Aufgabe der Erfindung ist es, ein verbessertes Planetengetriebe und ein Verfahren zur Herstellung eines Planetengetriebes anzugeben, insbesondere solche, die eine gegenüber dem Stand der Technik kompaktere Bauweise, einfache Herstellbarkeit und/oder Zuverlässigkeit bieten.

Die Aufgabe wird mit einem Planetengetriebe mit einer Vorrichtung nach dem Anspruch 1 und einem Verfahren zur Herstellung nach dem nebengeordneten Anspruch gelöst. Vorteilhafte Weiterbildungen und Ausführungsformen ergeben sich aus den Unteransprüchen und aus dieser Beschreibung.

Bei typischen Ausführungsformen ist das Innengewinde ausgeführt, um mit dem Außengewinde in Eingriff zu stehen und/oder in das Außengewinde zu passen und/oder für eine Klebeverbindung mit dem Außengewinde eingerichtet. Bei weiteren Ausführungsformen können zusätzliche Hülsen mit Gewinden zwischen Innen- und Außengewinde vorgesehen sein, welche typischerweise ebenfalls mit Klebstoff versehen sind.

Typischerweise wird der Klebstoff vor dem Verschrauben der Maschinenteile auf das erste und/oder das zweite Maschinenteil aufgetragen. Die Klebstoffmenge bestimmt sich dabei gemäß den Spezifikationen des Klebstoffs. Typische Klebstoffe, welche bei Ausführungsformen eingesetzt werden, sind anaerobe Klebstoffe für Welle-Nabe-Verbindungen wie z.B. Loctite 638.

Durch die miteinander in Eingriff stehenden Innen- und Außengewinde des ersten und zweiten Maschinenteils ist die Fläche auf welcher der Klebstoff aufgetragen ist gegenüber glatten Wellen vergrößert. Durch die Selbsthemmung des Gewindes wird eine besonders sichere Verbindung geschaffen. Typische Ausführungsformen weisen daher eine sehr gute stoff- und formschlüssige Verbindung von erstem und zweitem Maschinenteil auf, welche für die Übertragung von Drehmomenten geeignet ist.

Bei typischen Ausführungsformen ist insbesondere das erste Maschinenteil oder das zweite Maschinenteil als Planetenträger ausgeführt. Dies ermöglicht eine kompakte Bauweise eines Getriebes. Typische Planetenträger sind einwangig oder zweiwangig ausgeführt.

Typische Ausführungsformen ermöglichen einen großen Außendurchmesser des Planetenradträgers. Bei typischen Ausführungsformen ist der Außendurchmesser bei einem als Planetenradträger ausgeführten Maschinenteil größer als der Innendurchmesser des oder der Wälzlager.

Typische Ausführungsformen lassen einen großen Teilkreisdurchmesser der Planetenachsen des als Planetenträger ausgeführten ersten oder zweiten Maschinenteils zu. Typischerweise beträgt der Teilkreisdurchmesser des Planetenträgers mindestens 54% oder mindestens 65% oder mindestens 75% des Innendurchmessers des Hohlrades des Planetengetriebes. Mit Teilkreisdurchmessern von Ausführungsformen sind Übersetzungen von i=3 und/oder größer möglich.

Typische Ausführungsformen umfassen keinerlei zusätzliche Verbindungen zusätzlich zu dem Innen- oder Außengewinde. Bei typischen Ausführungsformen ist die Verbindung der Maschinenteile frei von zusätzlichen Bolzen und/oder frei von zusätzlich Schrauben. Bei typischen Ausführungsformen sind die Maschinenteile Verbindungsmittel-frei - mit Ausnahme der geklebten Verbindung des Innengewindes mit dem Außengewinde.

Bei erfindungsgemäßen Ausführungsformen ist zumindest eines der beiden Maschinenteile eine Welle. Typische Wellen können Flansche, Abtriebsflansche oder Lochkreise zur Befestigung eines angetriebenen Gegenstands umfassen. Weitere Wellen sind glatt oder weisen eine Evolvente oder eine Nut bzw. Passfeder oder ein weiteres Gewinde an einem gegenüberliegenden Ende bezüglich des Innen- bzw. Außengewindes auf. Bei typischen Ausführungsvarianten ist eines der beiden Maschinenteile als Abtriebselement ausgeführt. Typische Abtriebselemente weisen eine Riemenscheibe, ein Klemmelement oder Ritzel auf.

Bei typischen Ausführungsformen sind das erste Maschinenteil und/oder das zweite Maschinenteil mit einem oder mehreren Wälzlagern gelagert. Bei typischen Ausführungsformen sind beide Maschinenteile mit genau zwei Wälzlagern gelagert. Typische Wälzlager sind bei Ausführungsformen insbesondere Kugellager oder Rollenlager.

Bei erfindungsgemäßen Ausführungsbeispielen ist zumindest eines der beiden Maschinenteile durch beide Wälzlager gelagert. Beispielsweise kann eines der beiden Maschinenteile mit beiden Innenringen der beiden Wälzlager in Kontakt stehen.

Bei typischen Ausführungsformen ist das zweite Maschinenteil als Abtriebswelle im Wälzlager zentriert.

Bei typischen Ausführungsformen sind das erste und das zweite Maschinenteil zueinander über zumindest einen Zentrierabschnitt zentriert.

Auf diese Weise kann ein Verkippen der ineinander montierten beiden Maschinenteile vermieden werden.

Typischerweise ist ein Innenring der ein oder mehreren Wälzlager mit beiden Maschinenteilen in Kontakt. Bei typischen Ausführungsformen befindet sich eine Fügestelle im Bereich des zumindest einen Wälzlagers. Zumindest eines der Maschinenteile lässt sich auf die Weise in einem der Wälzlager zentrieren. Eine weitere Zentrierung ist typischerweise zwischen dem ersten und dem zweiten Maschinenteil vorgesehen. Bei weiteren Ausführungsformen weisen die Maschinenteile zumindest einen oder zwei Zentrierabschnitte auf. Eine Zentrierung über die Lager ist nicht bei allen Ausführungsformen zwingend.

Bei typischen Ausführungsformen ist das erste oder zweite Maschinenteil ausschließlich im jeweils anderen der beiden Maschinenteile zentriert. Typischerweise können ein erster und/oder ein zweiter Zentrierabschnitt zwischen erstem und zweitem Maschinenteil vorgesehen sein. Typischerweise ist ein erster Zentrierabschnitt rechts und zweiter Zentrierabschnitt links eines Bereichs des Gewindes angeordnet. "Links" und "rechts" bezieht sich auf seitliche Schnittansichten und könnte auch durch "axial vor" und "axial dahinter" ersetzt werden.

Typischerweise sind die Wälzlager identisch. Bei weiteren Ausführungsformen sind die Wälzlager in unterschiedlichen Breiten und/oder Durchmessern ausgeführt.

Bei typischen Ausführungsformen erfindungsgemäßer Vorrichtungen ist zumindest eines der ein oder mehreren Wälzlager zumindest teilweise oder vollständig innerhalb eines axialen Bereichs des Innengewindes. Mit "axial" ist dabei typischerweise die Richtung einer Rotationsachse gemeint. Typischerweise sind bei Ausführungen mit zwei Wälzlagern beide Wälzlager jeweils zumindest teilweise innerhalb des axialen Bereichs des Innengewindes angeordnet. Auf diese Weise wird eine kompakte Bauform erreicht.

Bei erfindungsgemäßen Ausführungsformen ist bei dem als Planetenträger ausgeführten Maschinenteil der Lagerinnendurchmesser des oder der Wälzlager kleiner oder gleich wie ein Durchmesser des äußeren Umfangs der Planetenbolzen. Der äußere Umfang bezieht sich dabei auf die bezüglich der Getriebeachse radial äußere Umlaufbahn der Planetenbolzen. Dies gilt besonders bei einem Getriebe mit einem weiteren der beiden Maschinenteile, welches einen Abtriebsflansch umfasst. Typischerweise ist der Abtriebsflansch im Außendurchmesser größer als ein Lagerinnendurchmesser des oder der Wälzlager.

Ein nicht beanspruchter Aspekt betrifft einen Bausatz für eine Vorrichtung in einer der hierin beschriebenen typischen Ausführungsformen, wobei eines der beiden Maschinenteile ein Planetenträger ist und für das andere der beiden Maschinenteile eine Anzahl von unterschiedlichen Wellen, welche zu dem Planetenträger passen vorgesehen ist. Dabei ist mit "passen" in dem vorherigen Satz typischerweise ein Passen der Innen- und Außengewinde der Maschinenteile gemeint. Bei weiteren Ausführungsformen von Bausätzen sind verschiedene Zahnträger und/oder Planetenträger vorhanden, welche bspw. unterschiedliche Teilkreisdurchmesser der Planetenachsen aufweisen können oder eine unterschiedliche Anzahl von Bolzenaufnahmen für Planetenräder, typischerweise 3 oder 4 oder 6.

Bei typischen Bausätzen sind die unterschiedlichen Wellen zumindest teilweise als Abtriebswellen mit unterschiedlichen Außendurchmessern und/oder mit unterschiedlichen Abtriebsflanschen ausgeführt. Unterschiedliche Abtriebsflansche können sich durch die Abtriebsgeometrie, im Lochkreisdurchmesser oder eben im Außendurchmesser oder in weiteren geometrischen Größen unterscheiden. Erfindungsgemäße Getriebe sind als Planetengetriebe ausgeführt. Getriebe von Ausführungsformen können ein Übersetzungsverhältnis von mindestens oder genau i=3 aufweisen.

### Kurze Beschreibung der Zeichnung

Nachfolgend wird die Erfindung anhand der beiliegenden Zeichnung näher erläutert, wobei die Figur zeigt:
- Fig. 1: zeigt schematisch eine Ausführungsform der Erfindung in einem Ausschnitt eines Längsschnitts durch ein Getriebe und
- Fig. 2: zeigt schematisch eine weitere Ausführungsform in einem Ausschnitt eines Längsschnitts durch ein Getriebe.

### Beschreibung von Ausführungsbeispielen

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsform werden unter Umständen in verschiedenen Figuren und für verschiedene Ausführungsformen gleiche Bezugszeichen für gleiche oder ähnliche Teile verwendet, um die Beschreibung übersichtlicher zu gestalten. Dies bedeutet jedoch nicht, dass entsprechende Teile der Erfindung auf die in den Ausführungsformen dargestellten Varianten beschränkt sind.

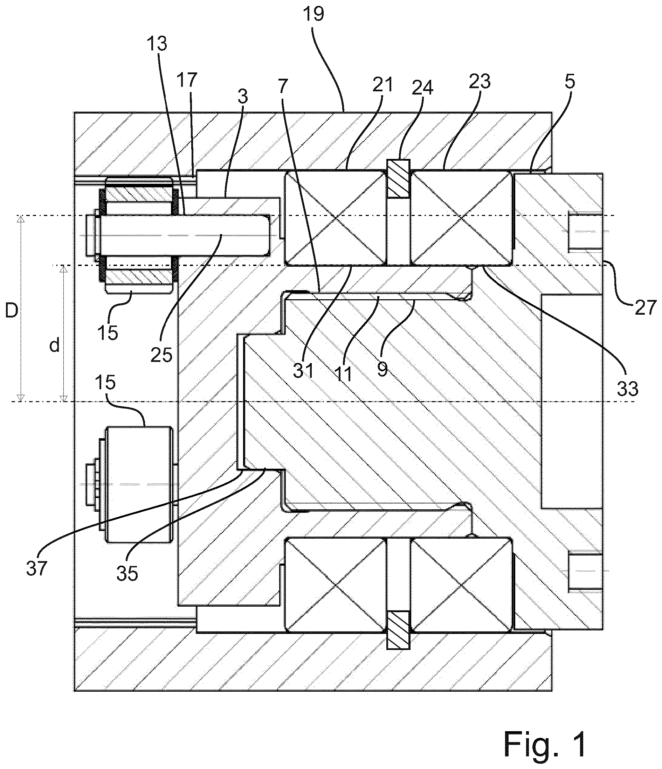

In der Fig. 1 ist ein Teil einer typischen Ausführungsform eines Getriebes gezeigt, welches eine typische Vorrichtung zur Verbindung zweier Maschinenteile umfasst, bei dem gezeigten Ausführungsbeispiel zwei Maschinenteile aus Metall, welche um dieselbe Achse rotieren.

Im Einzelnen umfasst das Getriebe ein erstes Maschinenteil 3, welches als Planetenträger ausgeführt ist. Weiterhin umfasst das Getriebe ein zweites Maschinenteil 5, welches bei dem Ausführungsbeispiel der Fig. 1 als Abtriebswelle mit Abtriebsflansch 27 ausgeführt ist.

Das erste Maschinenteil umfasst ein Innengewinde 7. Das zweite Maschinenteil umfasst ein Außengewinde 9, welches in das Innengewinde 7 eingeschraubt ist. Zwischen dem Innengewinde 7 und dem Außengewinde 9 ist Klebstoff 11 angeordnet.

Das erste Maschinenteil 3 ist als Planetenträger ausgeführt und umfasst insgesamt drei Aufnahmen für Planetenbolzen 13, von denen in der Fig. 1 lediglich einer dargestellt ist. Die Planetenbolzen 13 tragen jeweils Planetenräder 15. Die Planetenräder 15 kämmen ein Hohlrad 17, welches integral mit einem Gehäuse 19 des Planetengetriebes ausgeführt ist.

In dem Gehäuse 19 sind zwei als Rillenkugellager ausgeführte Wälzlager 21 und 23 aufgenommen, welche die beiden Maschinenteile 3 und 5 lagern. Zwischen den Wälzlagern 21 und 23 ist ein Sicherungsring 24 vorgesehen.

Das zweite Maschinenteil 5 ist lediglich in einem Bereich eines Lagerinnenrings 33 des zweiten Wälzlagers 23 unmittelbar gelagert. Das erste Wälzlager umfasst einen Lagerinnenring 31, welcher mit einem Außenumfang des ersten Maschinenteils 3 in Kontakt ist.

Im Bereich des Lagerinnenrings 33 des zweiten Wälzlagers 23 befindet sich eine Schnittstelle zwischen dem ersten Maschinenteil 3 und dem zweiten Maschinenteil 5. Die Schnittstelle erstreckt sich von dem Lagerinnenring 33 radial nach innen und geht dann in die Schnittstelle zwischen die horizontal ausgerichteten Innengewinde 7 und Außengewinde 9 über. Zumindest eines der Maschinenteile 3 und 5 kann somit über zumindest einen der Lagerinnenringe 31 und 33 eines der Wälzlager 21 und 23 zentriert werden. Eine weitere Zentrierung ist am Ende des zweiten Maschinenteils 5 vorgesehen, wo ein Endabschnitt 35 des zweiten Maschinenteils 5 in eine entsprechende Ausnehmung 37 des ersten Maschinenteils 3 eingreift.

Das erste Maschinenteil 3 ist in dem Lagerinnenring 31 des ersten Wälzlagers 21 und einem Teilbereich des Lagerinnenrings 33 des zweiten Wälzlagers 23 aufgenommen. Insgesamt sind somit lediglich die beiden Wälzlager 21 und 23 zur Lagerung der Maschinenteile 3 und 5 vorhanden.

Dadurch, dass die beiden Maschinenteile 3 und 5 nicht durch Schrauben oder Bolzen verbunden sein müssen, kann der Teilkreisdurchmesser 25 der Planetenbolzen 13, welcher auch Bolzenkreisdurchmesser genannt werden kann, relativ weit außen liegen.

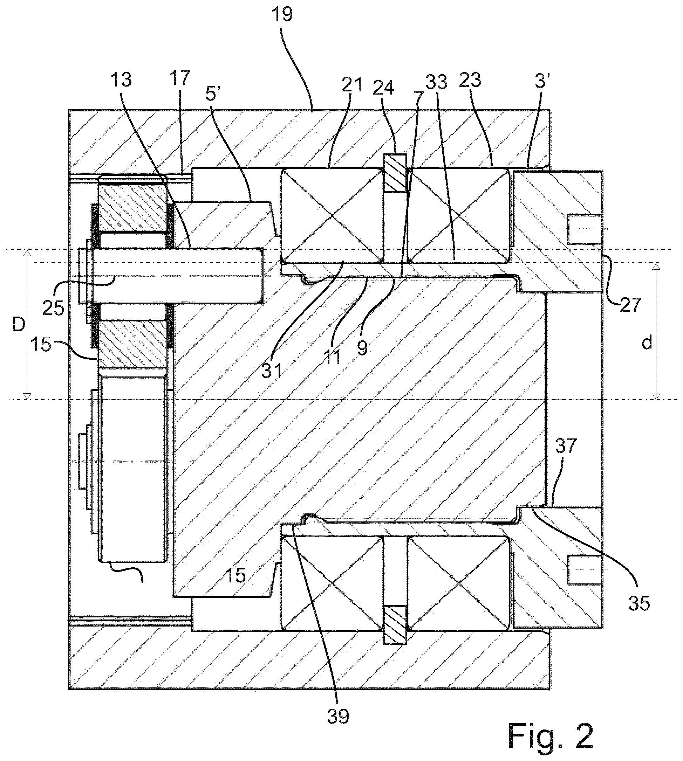

Das in der Fig. 1 teilweise gezeigte Planetengetriebe weist eine Übersetzung von i=3 auf. Weitere Getriebe können mit weiter radial innen liegenden Planetenbolzen und entsprechenden Aufnahmen in dem ersten Maschinenteil größere Übersetzungen aufweisen, siehe Fig. 2, in welcher eine Übersetzung von i=10 dargestellt ist. Typische Ausführungsbeispiele können auch andere Übersetzungen aufweisen.

Das zweite Maschinenteil 5 weist einen Abtriebsflansch 27 auf, an den weitere Wellen, Abtriebselemente wie Ritzel oder Riemenscheiben oder Maschinen angeschlossen werden können.

Die Lagerrinnenringe 31 und 33 sind wie die übrigen Teile der Wälzlager 21 und 23 identisch ausgeführt. Die Lagerinnenringe 31 und 33 weisen einen Innendurchmesser d auf, welcher kleiner ist als ein Durchmesser des Flansches 27 des zweiten Maschinenteils 5. Weiterhin ist der Innendurchmesser der Lagerinnenringe kleiner oder gleich dem Durchmesser D der äußeren Umlaufbahn der Planetenbolzen 13. Der Lagerinnendurchmesser d der Wälzlager 21 und 23 und/oder der Lagerinnenringe 31 und 33 ist geringer als der Außendurchmesser des ersten Maschinenteils 3.

Bei Bausätzen von Ausführungsformen sind verschiedene erste Maschinenteile und/oder verschiedene zweite Maschinenteile vorhanden, welche jedoch alle über dieselbe Schnittstelle in Form des Innengewindes und des Außengewindes verfügen. Weiterhin sind die jeweiligen Maschinenteile eines Bausatzes im Bereich der Bereiche, welche mit den Wälzlagern interagieren gleich ausgeführt. Auf diese Weise können für verschiedene Übersetzungen und/oder verschiedene Anwendungen zahlreiche Gleichteile verwendet werden.

Eine Montage des Getriebes der Fig. 1 kann erfolgen, indem ein Wälzlager auf dem ersten Maschinenteil vormontiert wird. Anschließend kann das erste Maschinenteil mit dem Wälzlager in das Gehäuse eingeschoben werden. Das zweite Wälzlager wird zwischen Gehäuse und erstem Maschinenteil montiert. Anschließend wird das zweite Maschinenteil, auf dessen Außengewinde Klebstoff aufgetragen wurde, in das erste Maschinenteil eingeschraubt. Alternativ kann der Klebstoff auf das Innengewinde des ersten Maschinenteils aufgetragen werden. Eine Zentrierung erfolgt dabei über das zweite Wälzlager und einen Zentrierabschnitt zwischen erstem Maschinenteil und zweitem Maschinenteil.

In der Fig. 2 ist eine weitere Ausführungsform dargestellt, bei welcher das erste Maschinenteil 3' nun als Abtriebswelle mit entsprechenden Merkmalen ausgeführt ist und bei welcher das zweite Maschinenteil 5' als Planetenträger mit Aufnahmen für Planetenbolzen 13 ausgeführt ist.

Die Maschinenteile 3' und 5' sind gegenüber der Ausführungsform der Fig. 1 unterschiedlich gestaltet, allerdings weisen sie ähnliche Merkmale auf, welche mit den gleichen Bezugszeichen versehen sind.

Die Achsen der Planetenbolzen 13 der Ausführungsform der Fig. 2 sind weiter innen angeordnet, so dass der Teilkreisdurchmesser 25 kleiner ist und die Übersetzung des Planetengetriebes der Fig. 2 i=10 ist.

Eine Zentrierung erfolgt bei der Ausführungsform der Fig. 2 durch den Kontakt der beiden Maschinenteile 3' und 5' untereinander, wobei zusätzlich ein zweiter Zentrierabschnitt 39 vorgesehen ist. Die Wälzlager 21 und 23 sind bei dem Ausführungsbeispiel der Fig. 2 nicht an der Zentrierung beteiligt.

Die Herstellung der Ausführungsform der Fig. 2 erfolgt, indem die Wälzlager 21 und 23 in das Gehäuse 19 eingepresst werden und anschließend das zweite Maschinenteil 5' eingeschoben wird. Anschließend wird das erste Maschinenteil 3', auf dessen Außengewinde 9 Klebstoff aufgetragen wurde, in das zweite Maschinenteil 5' eingeschraubt.

## Patentansprüche

1. Planetengetriebe, mit einer Vorrichtung zur Verbindung zweier um dieselbe Achse rotierbarer Maschinenteile (3, 5) aus Metall, mit
- einem ersten Maschinenteil (3),
- einem zweiten Maschinenteil (5),
- wobei eines der beiden Maschinenteile (3, 5) ein Planetenträger mit Aufnahmen für Planetenbolzen (13) ist, wobei in den Aufnahmen Planetenbolzen (13) aufgenommen sind, welche Planetenräder (15) tragen, und
- wobei das erste Maschinenteil (3) ein Innengewinde (7) und das zweite Maschinenteil (5) ein Außengewinde (9) aufweist, und
- Klebstoff (11), welcher zwischen dem Innengewinde (7) und dem Außengewinde (9) angeordnet ist,
- wobei das erste Maschinenteil (3) und/oder das zweite Maschinenteil (5) mit einem oder mehreren Wälzlagern (21, 23) gelagert ist,
**dadurch gekennzeichnet, dass**
- ein Durchmesser (D) einer bezüglich einer Getriebeachse des Planetengetriebes radial äußeren Umlaufbahn von Umfängen der Planetenbolzen (13) größer ist als ein Lagerinnendurchmesser (d) der Wälzlager (21, 23);
- wobei das andere der beiden Maschinenteile (3, 5) eine Welle ist.

2. Verfahren zur Herstellung eines Planetengetriebes nach Anspruch 1, mit:
- Vormontieren mindestens eines Wälzlagers (21) auf dem ersten Maschinenteil (3),
- Einfügen des ersten Maschinenteils (3) mit dem vormontierten Wälzlager (21) in ein Gehäuse (19),
- Auftragen von Klebstoff auf das erste Maschinenteil (3) und/oder das zweite Maschinenteil (5); und
- Einschrauben des zweiten Maschinenteils (5) in das erste Maschinenteil (3).

## Claims

1. Planetary gear train comprising a device for connecting two machine parts (3, 5) made of metal that can be rotated about the same axis, comprising
- a first machine part (3),
- a second machine part (5),
- one of the two machine parts (3, 5) being a planet carrier (3) having receptacles for planet pins (13), planet pins (13) being accommodated in the receptacles, which pins support planet gears (15), and
- the first machine part (3) having an internal thread (7) and the second machine part (5) having an external thread (9), and
- adhesive (11) which is arranged between the internal thread (7) and the external thread (9),
- the first machine part (3) and/or the second machine part (5) being mounted with one or more rolling bearings (21, 23),
**characterised in that**
- a diameter (D) of an orbit of peripheries of the planet pins (13) that is radially outer with respect to a gear axis of the planetary gear train is greater than a bearing inner diameter (d) of the rolling bearings (21, 23);
- wherein the other of the two machine parts (3, 5) is a shaft (5).

2. Method for producing a planetary gear train according to claim 1, comprising:
- preassembling at least one rolling bearing (21) on the first machine part (3),
- inserting the first machine part (3) with the preassembled rolling bearing (21) into a housing (19),
- applying adhesive to the first machine part (3) and/or to the second machine part (5); and
- screwing the second machine part (5) into the first machine part (3).

## Revendications

1. Engrenage planétaire, comprenant un dispositif de liaison de deux parties de machine (3, 5) en métal pouvant tourner autour du même axe, comprenant
- une première partie de machine (3),
- une seconde partie de machine (5),
- dans lequel une des deux parties de machine (3, 5) est un porte-satellites (3) comprenant des cavités pour des axes de satellites (13), dans lequel les axes de satellites (13) sont reçus dans les cavités, qui portent des roues planétaires (15), et
- dans lequel la première partie de machine (3) présente un filetage interne (7) et la seconde partie de machine (5) présente un filetage externe (9), et
- un adhésif (11), qui est agencé entre le filetage interne (7) et le filetage externe (9),
- dans lequel la première partie de machine (3) et/ou la seconde partie de machine (5) est/sont supportée(s) avec un ou plusieurs paliers à roulement (21, 23),
**caractérisé en ce que**
- un diamètre (D) d'une orbite radialement externe par rapport à un axe d'engrenage de l'engrenage planétaire à partir des circonférences des axes de satellites (13) est supérieur à un diamètre interne de palier (d) des paliers à roulement (21, 23);
- dans lequel l'autre des deux parties de machine (3, 5) est un arbre (5).

2. Procédé de fabrication d'un engrenage planétaire selon la revendication 1, comprenant :
- le prémontage d'au moins un palier à roulement (21) sur la première partie de machine (3),
- l'insertion de la première partie de machine (3) avec le palier à roulement (21) prémonté dans un boîtier (19),
- l'application d'adhésif sur la première partie de machine (3) et/ou la seconde partie de machine (5) ; et
- le vissage de la seconde partie de machine (5) dans la première partie de machine (3).
